Europäisches Patentamt

European Patent Office

Office européen des brevets

(11) Publication number: **0 346 092**
**A1**

# EUROPEAN PATENT APPLICATION

(21) Application number: 89305736.4

(22) Date of filing: 07.06.89

(51) Int. Cl.⁴: **G 21 B 1/02**
**G 21 K 1/00**

(30) Priority: 07.06.88 US 203678

(43) Date of publication of application:
13.12.89 Bulletin 89/50

(84) Designated Contracting States:
AT BE CH DE ES FR GB GR IT LI LU NL SE

(71) Applicant: APRICOT S.A.
16, rue Notre-Dame
L-2240 Luxembourg (LU)

(72) Inventor: Lo, Shui-Yin
3649 Woodcliff Road
Sherman Oaks California 91403 (US)

(74) Representative: Jackson, David Spence et al
REDDIE & GROSE 16, Theobalds Road
London, WC1X 8PL (GB)

(54) Method and apparatus for producing nuclear energy.

(57) A pair of microwave plasma generators (10,12) generate deuteron-electron plasma in neutral deuterium gas in chambers (18,20) at $10^{-6}$ torr. Plasma beams (14,16) from the chambers (18,20) are collimated by skimmers (22,24) and expanded by magnetic fields established by solenoids (26,28). The beams (14,16) collide in a collision chamber (30) where the conditions for coherence of the deuterons exist and results in nuclear fusion.

EP 0 346 092 A1

Bundesdruckerei Berlin

**Description**

## METHOD AND APPARATUS FOR PRODUCING NUCLEAR ENERGY

BACKGROUND OF THE INVENTION

(i) Field of the Invention

This invention relates to a method and apparatus for producing nuclear energy. By "nuclear energy" is meant energy coming from the interaction of atomic nuclei.

(ii) Prior art

A coherent boson beam consists of bosons which can be either stable or unstable. The distinction, however, between stable or unstable bosons becomes blurred when bosons are coherent. Some bosons, normally regarded as stable, will become unstable when they are coherent. For example, deuterons which are normally regarded as stable become unstable and decay when they form a coherent beam.

For a beam of deuterons with a neutralizing background of electrons, the beam is normally regarded as stable because the deuterons are separated from one another by Coulomb repulsion. Classically, they cannot fuse together. However, quantum mechanically there is still some probability that the deuterons may tunnel through the Coulomb potential barrier and fuse:

$$d^+ + d^+ \longrightarrow {}^3He + n + 3.27 MeV$$
$$\longrightarrow t + p + 4.03 MeV$$

$$(1)$$

with the release of nuclear energy, 3.27 and 4.03 MeV respectively.

The probability can be estimated by solving the Schrodinger equation

$$(2)$$

$$H \psi = E \psi$$
$$H = \frac{p^2}{2\mu} + V(x)$$
$$V = \frac{\alpha}{r}, \quad = 1/137$$

where $\mu = m/2$ is the reduced mass, and V is the Coulomb potential between two deuterons.

In semiclassical approximation, equation (2) can be solved to yield the probability as

$$(3)$$

$$P = \exp\left(-2 \int_0^{r_c} k \, dr\right)$$
$$k = \sqrt{2\mu(V-E)}$$
$$E = \text{kinetic energy}$$
$$r_c = \text{classical turning point}$$

setting $E \simeq 0$, the probability is

$$P = \exp\left(-4\sqrt{\alpha m r_c}\right)$$

$$= \exp\left(-4 \times 10^4\right)$$

$$\sim 10^{-1.7 \times 10^4} \qquad (4)$$

Hence, the likelihood of a deuteron beam decaying is extremely small and the beam is stable.

BRIEF SUMMARY OF THE INVENTION

When the boson beam becomes coherent, the decay rate $\Gamma_m$ is increased by a factor of m

$$\Gamma_m = m! \, \Gamma_1 \qquad (4a)$$

where $\Gamma_1$ is the normal decay rate and m is the number of coherent particles. For $m = 10^4$, the decay rate of a coherent deuteron beam becomes

$$\Gamma_m = \frac{10^{4 \times 10^4}}{e} \times \Gamma_1$$

which is comparable to the tunnelling probability given by equation (4a). Hence, for a coherent beam with particles $m > 10^4$, the beam rapidly decays.

The decay of a coherent deuteron beam according to equation (1) will yield nuclear energy. Normally, one seeks to obtain conditions conductive to inducing confined nuclear fusion, as indicated by equation (1), by increasing the kinetic energy, i.e. the value of E in equation (2) and hence decreasing the value of k in equation (3). Hence, the probability P will increase rapidly. It follows from the above, however, that there is no need to increase the kinetic energy E of each deuteron. In fact, the relative kinetic energy of the deuteron is reduced to zero in a coherent beam. The probability of fusion is increased by a completely different physical principle, namely the collective effect of coherent bosons.

The chief difficulty of past attempts to induce production of nuclear fusion energy arises because of the difficulty in confining charged deuteron particles for a long enough time, at close enough distance, to cause them to tunnel through the Coulomb barrier. Magnetic confinement schemes such as that adopted in the well-known "Tokamak" employ strong magnetic fields to confine deuterons in a toroidally shaped region. Inertia confinement schemes, such as employed in known laser implosion techniques, seek to reduce the distance between the deuterons.

In the above, the term "decay" is used in reference to a beam of coherent particles whereas the mechanism actually consists of the fusion of two deuterons. Normally decay refers to one particle decaying into two or more particles. It is also possible that nuclear energy is released from the decay of an atomic nucleus, e.g., $_{84}Po^{212} \rightarrow {}_{82}Pb^{208} + \alpha$

Polomium 212 decays into lead via $\alpha$-decay with 8 MeV energy released. When a coherent beam of polomium 212 is formed, it will also decay with enhanced rate given by Eq.(5). Then we have both the decay of the coherent beam and the decay of individual atomic nucleus. Generally, nuclear energy can be obtained from fusion of two light nuclei or from fission of a heavy nuclei. By making nuclei into a coherent beam, the rate of interaction is enhanced, so that energy can be released where it is needed.

In view of the foregoing, the invention broadly comprises a method of producing nuclear energy comprising generating coherent bosons and extracting nuclear energy therefrom.

In a particular form of the invention, the nuclear energy is produced by decay of the coherent bosons.

The invention further provides apparatus for carrying out the method of the invention comprising two boson generators effective to produce beams of bosons and a collision chamber arranged to receive the bosons from the beams, for collision therein, to produce said nuclear energy.

The scheme proposed by this invention requires neither exceptionally long interaction times nor small distances between deuterons. It is only required that the deuterons be coherent so that the m factorial (m) factor is effective to overcome the normally extremely small probability mentioned above.

By freely expanding ions with neutral gas one may cool the ions to a temperature T close to 1°K, and by expanding the ions by the use of a vanishing magnetic field, one may further cool the ions to $10^{-3}$°K millidegree Kelvin. Such a very cool ion beam may be utilized in conjunction with the induced scattering mechamism

3

described in International Patent Application PCT/AU86/00212.

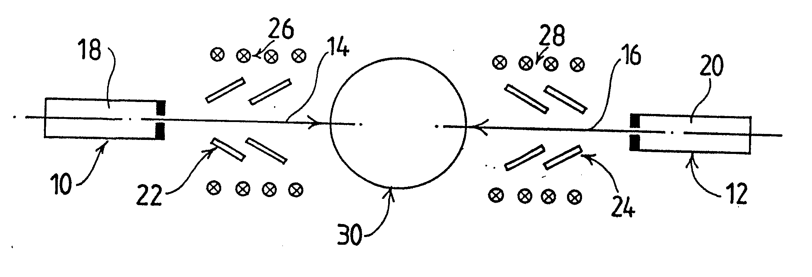

BRIEF DESCRIPTION OF THE DRAWING

The invention is further described by way of example only with reference to the accompanying drawing the single Figure of which is a diagrammatic axial section of an apparatus for carrying out the method of this invention

DETAILED DESCRIPTION

The scheme to be described is effective to create coherent deuterons by the collision of two very cool ($10^{-3}°$K) deuteron ion beams.

The drawing shows microwave plasma generators 10,12 which create deuteron ions at approximately 1 atmosphere pressure. These ions are expanded as deuteron-electron plasma and neutral deuterium gas in vacuum chambers 18,20 at a pressure of $10^{-6}$ torr. Resultant deuteron-electron beams 14,16 are collimated in the forward directions by respective sets of skimmers 22,24. During the expansion phase, external magnetic fields are imposed by solenoids 26, 28 surrounding skimmers 22, 24. The magnetic fields extend in the direction of the deuteron-electron plasma beams. The magnetic fields may be created by the described solenoids or more economically by permanent magnets, (not shown) say of 5 kilogauss. The deuteron-electron plasma beams heat up when entering into the magnetic fields. In this initial stage the plasma will be cooled down by collision with the neutral cool gas. The neutral gas background can be cooled down to about 1°K as is the plasma. The deuteron-electron plasma beams then cool down further to millidegree Kelvin expanding thereafter during passage through the strong magnetic field (of kilogauss) provided by solenoids 26, 28 which fields reduce to almost zero outside the vicinities of the solenoids.

The two beams 14,16 are coaxially aligned and directed into a collision chamber 30. There are four parameters that are crucial to the creation of coherent deuterons in chamber 30, pursuant to this collision.

1) The density of deuteron ions $n_i$. The higher the density of the deuteron ions, the higher are the chances of the ions becoming coherent. Typically $n_i$ may be $10^{12}/cm^3$ at the microwave plasma generators 10,12 decreasing to $10^9/cm^3$ during the plasma expansion phase.

2) The kinetic energy K of the deuteron beam. The plasma in microwave plasma generators 10, 12 has a temperature of $10^{3}°$Ks which is equivalent to 0.1 eV kinetic energy. Hence the deuteron-electron beams have longitudinal kinetic energy of the order 0.1 eV.

3) The longitudinal temperature $T_L$ of the deuteron-electron plasma. This may be about 1°K after expansion into the vacuum chambers 18,20.

4) The transverse temperature $T_T$ of the deuteron-electron plasma. This may drop to $T_T \sim 10^{-3}°$K (or $10^{-7}$ eV) at the collision chamber 30.

The lower the temperatures $T_L$ and $T_T$ are, the closer will be the approach to the critical condition of reaching coherence. The precise values of $n_i$, $K$, $T_L$ and $T_T$ for the critical condition of coherence can be derived from the formalism of induced scattering as described in International Patent Application PCT/AU86/00212.

The following comprises an estimate of the above critical values.

Firstly, concerning the phenomenum of boson condensation, the number of states for the distribution of bosons with momentum p and energy E at a given temperature T is given by:

$$N = g_D \int \frac{1}{e^{E/kT}-1} \frac{d^3 p V}{(2\pi)^3} \qquad (5)$$

where V is the volume and $g_D$ is the number of degeneracy for a deuteron with spin equal to one, $g_D = 3$ k being the Boltzmen constant. The density of boson particles is

$$n = \frac{N}{V} = \frac{g_D}{(2\pi)^3} 4\pi \int dp p^2 \sum_{j=1}^{\infty} e^{-jp^2/2mkT} \qquad (6)$$

The integral can be evaluated exactly to obtain

$$\Pi_c \; - \; \frac{g_D}{8\pi^2} \; \sqrt{\pi} \; (2 m_k T_c)^{3/2} \; \zeta (3/2)$$

$$\zeta = \sum_{j=1}^{\infty} 1/j^{3/2} \tag{7}$$

The critical density $n_c$ at critical temperature $T_c$ is thus set. For a given temperature $T = T_c$ if we increase the density n above the critical density $n_c$, the extra number of bosons will condense to form coherent bosons at the lowest energy ground state. Similarly for a given density $n = n_c$, if the temperature T drops below the critical temperature $T < Tc$, then there will be boson condensation. Typically the parameters are $Tc \sim 1^\circ K$ and $n_c \sim 10^{22}$ cm$^3$ Hence for the described type of value of deuteron ions, $n_i = 10^{12}$cm$^3$ and there is a shortfall in the required values by ten orders of magnitude for T $1^\circ K$.

However, if one utilises the mechanism of induced scattering the situation is different. Especially, the Coulomb scattering cross section between charged particles strongly peaks in the forward direction

$$d \; \sigma_c \sim \frac{1}{\theta^4} \tag{8}$$

$$\theta = scattered \; angle$$

If two charged beams move opposite one another, the induced scattering is of Coulomb type. The gain g as against ordinary S-wave scattering (or flat angular distribution) is very great.

$$g_c = \left(\frac{1}{\theta^4}\right) = \left(\frac{E}{T_T}\right)^2 \sim 10^{12} \tag{9}$$

for E = O .leV and $T_T = 10^{-7}$ eV. The critical density $n_c$ will then drop by a factor of $10^{12}$ from $10^{22}$ to $10^{10}$/cm$^3$. In addition, the temperature also drops, (8) suggests the critical density $n_c$ varies as temperature to the 3/2 power. So the gain $g_T$ in temperature

$$g_T \sim \left(\frac{T}{T_o}\right)^{3/2} \sim \tag{10}$$

$$= \left(\frac{1}{10^{-3}}\right)^{3/2} \sim 10^{4.5} \; for \; T_L = T_T = 10^{-3} \; ^\circ K$$

$$= 10^{-3} \; for \; T_L = 1^\circ K, \; T_T = 10^{-3} \; ^\circ K$$

Hence the critical density when boson condensation occurs is approximately
$n_c \sim 10^7$/cm$^3$
The expected density for deuteron ions $10^9$/cm$^3$ is larger than this critical value.

Concerning equation (10) above it is to be noted that for a plasma beam it often happens that the temperature T in the transverse direction is different from the temperature T in the longitudinal direction. Therefore the critical condition for boson condensation needs to be modified as we show in the following.

If one associates the partition of longitudinal energy with longitudinal temperature $T_L$ and transverse energy with transverse temperature $T_T$ in the fashion

$$\frac{E}{T} \rightarrow \frac{P_L^2}{2mT_L} + \frac{P_T^2}{2mT_T}$$

$$(12)$$

The critical condition becomes

$$n_c = \frac{g_D}{8^3} \sum_{j=1}^{\infty} \int dp_z \, d^2 p_T \, e^{-j P_z^2 / 2mT_L} \, e^{-j P_T^2 / 2mT_T}$$

Then we have the critical density to be

$$n_c = \frac{g_D \sqrt{\pi}}{8\pi^2} \left(2mT_L\right)^{\frac{1}{2}} \left(2mT_T\right) \zeta(3/2)$$

$$(13)$$

where boson condensation will occur. The dependence of n on transverse temperature is a linear function and that on longitudinal temperature is a square root function.

Once coherent deuterons are formed in the collision chamber 30, these will undergo nuclear fusion, and nuclear energy is released.

## Claims

1. A method of producing nuclear energy comprising generating coherent bosons and extracting nuclear energy therefrom.

2. A method as claimed in claim 1 wherein said extracting of energy is effected by the decay of said bosons.

3. A method as claimed in claim 1 wherein said nuclear energy is extracted by nuclear fusion of said bosons.

4. A method as claimed in claim 2 wherein said nuclear energy is extracted by nuclear fusion of said bosons.

5. A method as claimed in any of claims 1 to 3 wherein said bosons comprise deuterons.

6. A method as claimed in claim 4 where said bosons comprise deuterons.

7. A method as claimed in claim 1 wherein said bosons are generated as ions which are caused to undergo expansion prior to said extraction.

8. A method as claimed in claim 7 wherein said ions are generated in two beams which are directed towards each other to collide.

9. A method as claimed in claim 8 wherein said collision is effective to cause decay of said ions.

10. A method as claimed in claim 9 wherein said beams are passed through diminishing axially extending magnetic fields before said collision.

11. A method as claimed in claim 10 wherein said ions are deuterons.

12. Apparatus for carrying out the method of claim 1 comprising two boson generators effective to produce beams of bosons and a collision chamber arranged to receive the bosons from the beams, for

EP 0 346 092 A1

collision therein, to produce said nuclear energy.

13. Apparatus as claimed in claim 12 further comprising magnetic means for producing diminishing magnetic fields through which said beams respectively pass before reaching said collision chamber.

14. Apparatus as claimed in claim 13 including skimmers positioned in the paths of said beams between the respective said generators and the collision chamber.

7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | WO-A-8 700 681 (APRICOT) <br> * Figure 5; page 2, lines 11-14; page 3, line 26 - page 4, line 10; page 14, line 25 - page 15, line 5; page 26, line 35 - page 27, line 14; claims 60-62,66,67 * | 1-6,8,9 ,12 | G 21 B 1/02 <br> G 21 K 1/00 |
| A | PHYSICAL REVIEW B.CONDENSED MATTER, vol. 34, no. 5, September 1986, pages 3476-3479, The American Physical Society, Woodbury, New York, US; H.F. HESS: "Evaporative cooling of magnetically trapped and compressed spin-polarized hydrogen" <br> * Whole article * | 7,10,13 | |
| A | US-A-4 246 067 (W.I. LINLOR) <br> * Column 2, lines 57-65; column 5, lines 50-57 * | 8,12 | |

TECHNICAL FIELDS SEARCHED (Int. Cl.4)

G 21 B
G 21 K
H 01 J

The present search report has been drawn up for all claims

| Place of search | Date of completion of the search | Examiner |
|---|---|---|
| THE HAGUE | 25-08-1989 | FRITZ S.C. |

EPO FORM 1503 03.82 (P0401)